# EUROPÄISCHE PATENTSCHRIFT

(11) **EP 0 611 628 B1**
(45) Veröffentlichungstag und Bekanntmachung des Hinweises auf die Patenterteilung: **08.04.1998**
(21) Anmeldenummer: 93120239.4
(22) Anmeldetag: 16.12.1993
(51) Int. Cl.: B23Q 3/155

(54) **Verfahren zum Werkzeugwechsel und Werkzeugmaschine zur Durchführung des Verfahrens**
Tool changing method and machine-tool therefor
Procédé de chargement d'outil et machine-outil correspondante

(30) Priorität: 13.02.1993 DE 4304361
(43) Veröffentlichungstag der Anmeldung: 24.08.1994
(73) Patentinhaber: CHIRON-WERKE GMBH & CO. KG, 78532 Tuttlingen (DE)
(72) Erfinder: Rütschle, Eugen, D-78570 Mühlheim (DE); Winkler, Hans-Henning, D-78532 Tuttlingen (DE)
(74) Vertreter: Witte, Alexander, Dr.-Ing.

(56) Entgegenhaltungen:
- GB-A- 2 077 150
- PATENT ABSTRACTS OF JAPAN vol. 11, no. 235 (M-612) (2682) 31. Juli 1987 & JP-A-62 048 438 (TOSHIBA)
- PATENT ABSTRACTS OF JAPAN vol. 11, no. 228 (M-610) (2675) 24. Juli 1987 & JP-A-62 044 336 (YASUNAGA)
- PATENT ABSTRACTS OF JAPAN vol. 9, no. 316 (M-438) (2039) 12. Dezember 1985 & JP-A-60 150 936 (HITACHI)
- PATENT ABSTRACTS OF JAPAN vol. 9, no. 311 (M-436) (2034) 7. Dezember 1985 & JP-A-60 146 638 (TOSHIBA)
- PATENT ABSTRACTS OF JAPAN vol. 6, no. 48 (M-119) (926) 27. März 1982 & JP-A-56 163 857 (HITACHI)

## Beschreibung

Die vorliegende Erfindung betrifft ein Verfahren zum Werkzeugwechsel zwischen einem einer Werkzeugmaschine zugeordneten Maschinenmagazin und einem Wechselmagazin, bei dem das Maschinenmagazin mehrere in einer ersten Transportrichtung verfahrbare Werkzeug aufnimmt, das Wechselmagazin mehrere in einer zweiten Transportrichtung verfahrbare Werkzeuge aufnimmt, die in das Maschinenmagazin ein- oder aus dem Maschinenmagazin ausgewechselt werden sollen, und bei dem eine Übergabevorrichtung die Werkzeuge zwischen dem Maschinenmagazin und dem Wechselmagazin wechselt, wobei die Übergabevorrichtung für den Werkzeugwechsel das Maschinenmagazin und das Wechselmagazin durch Magazinweichen vorübergehend in Reihe schaltet.

Die Erfindung betrifft ferner eine Werkzeugmaschine, mit einem zugeordneten Maschinenmagazin zur Aufnahme von mehreren, in einer ersten Transportrichtung verfahrbaren Werkzeugen, einem Wechselmagazin zur Aufnahme von mehreren, in einer zweiten Transportrichtung verfahrbaren Werkzeugen, die in das Maschinenmagazin ein- oder aus dem Maschinenmagazin ausgewechselt werden sollen, sowie mit zumindest einer Übergabevorrichtung für den Werkzeugwechsel zwischen dem Maschinenmagazin und dem Wechselmagazin, wobei die Übergabevorrichtung Magazinweichen aufweist, über die das Maschinenmagazin und das Wechselmagazin für den Werkzeugwechsel in Reihe schaltbar sind.

Eine derartige Werkzeugmaschine, auf der das bekannte Verfahren durchgeführt werden kann, ist aus der GB 2 077 150 A bekannt.

Ähnliche Verfahren zum Werkzeugwechsel sowie entsprechende Werkzeugmaschinen zur Durchführung des Verfahrens sind außerdem aus der DE-OS 38 17 256 sowie aus der EP-A-0 243 537 bekannt.

Bei den bekannten Werkzeugmaschinen dient das Maschinenmagazin zur Aufnahme der Werkzeuge, die für den zur Zeit durchzuführenden Bearbeitungsgang erforderlich sind. Derartige auch Bearbeitungszentrum genannte Werkzeugmaschinen führen nämlich nacheinander eine Reihe verschiedener Arbeitsvorgänge an einem einzigen Werkstück durch, wozu verschiedene Werkzeuge benötigt werden.

Die Speicherkapazität eines solchen Maschinenmagazins kann jedoch nicht unbegrenzt ausgeweitet werden, weil dadurch der mittlere Transportweg eines Werkzeuges von seiner momentanen Position in dem Maschinenmagazin zu der Bearbeitungsposition immer länger wird. Dies beeinträchtigt jedoch die mittlere Bearbeitungszeit der Werkzeugmaschine.

Andererseits ist zu bedenken, daß insbesondere beim Langzeitbetrieb einer solchen Werkzeugmaschine die Werkzeuge verschleißbedingt in bestimmten Abständen ausgewechselt werden müssen.

Gleichfalls kann ein Werkzeugwechsel erforderlich sein, wenn ein anderer Bearbeitungsvorgang gewünscht wird.

Zu diesem Zweck weisen die eingangs genannten Werkzeugmaschinen ein Wechselmagazin auf, das unabhängig von der Werkzeugmaschine ist und jeweils bedarfsweise herangebracht wird. Die Rüstzeit der bekannten Werkzeugmaschine hängt nun davon ab, wie schnell die Werkzeuge aus dem Maschinenmagazin ausgewechselt und die neuen Werkzeuge von dem Wechselmagazin in das Maschinenmagazin eingewechselt werden können.

Bei der aus der eingangs erwähnten EP-A-0 243 537 bekannten Werkzeugmaschine sind zu diesem Zweck zwei Wechselmagazine vorgesehen, die synchron und gleichsinnig mit dem Maschinenmagazin umlaufen. Das erste Wechselmagazin entnimmt die Werkzeuge aus dem Maschinenmagazin während das zweite Wechselmagazin mit neuen Werkzeugen bestückt ist und diese in das Maschinenmagazin einwechselt. Die bekannte Werkzeugmaschine ist konstruktiv sehr aufwendig, weil nicht nur zwei Wechselmagazine benötigt werden, um das Ein- und Auswechseln gleichzeitig durchführen zu können, sondern weil auch zwei Übergabestationen zwischen den Wechselmagazinen und dem Maschinenmagazin erforderlich sind.

Bei dem aus der DE-OS 38 17 256 bekannten Werkzeugmagazin ist nur eine Wechselstation mit einem Wechselmagazin vorgesehen, das synchron und gleichsinnig mit dem Maschinenmagazin umläuft. Zunächst wird ein leeres Wechselmagazin an die Übergabeposition gebracht, woraufhin die Werkzeuge reißverschlußartig aus dem Maschinenmagazin ausgewechselt werden. Dann wird das Wechselmagazin gegen ein neues Wechselmagazin mit einzuwechselnden Werkzeugen ausgetauscht. Diese neuen Werkzeuge werden jetzt in einen zweiten Wechselablauf reißverschlußartig in das Maschinenmagazin eingewechselt.

Zwar wird bei dieser Werkzeugmaschine nur eine Übergabeposition zwischen Maschinenmagazin und Wechselmagazin benötigt, es sind jedoch immer noch zwei verschiedene Wechselmagazine erforderlich. Neben dem dadurch bedingten hohen konstruktiven Aufwand ist auch das aus der DE-OS 38 17 256 bekannte Verfahren sehr zeitaufwendig, da zunächst die Werkzeuge aus dem Maschinenmagazin ausgewechselt werden müssen, bevor aus einem neu heranzubringenden Wechselmagazin dann Werkzeuge in das Maschinenmagazin wieder eingewechselt werden können.

Zusammenfassend ist es also bekannt, synchron mit dem Maschinenmagazin mitlaufende Wechselmagazine zu verwenden, wobei für das Auswechseln und das Einwechseln von Werkzeugen je ein gesondertes Wechselmagazin erforderlich ist.

Ferner ist aus der eingangs erwähnten GB 2 077 150 A ein System von aufgeständerten Hängeschienen bekannt, an denen Wagen laufen, die schwere Bearbeitungsköpfe von einer Speicherstelle zu einem Arbeitsbereich fahren, wo sie an den Schienen hängend ein Werkstück bearbeiten. Die Schienen sind in Form einer ersten Schleife angeordnet, der eine zweite Schleife zugeordnet ist, in der weitere Wagen mit Bearbeitungsköpfen gespeichert sind.

Zwischen den beiden Schleifen ist ein Schienenstück vorgesehen, das über Magazinweichen einerseits völlig in eine der beiden Schleifen eingeschaltet werden kann, so daß lediglich in dieser Schleife die Wagen im Kreis fahren können. Alternativ kann dieses Schienenstück auch an seinem einen Ende mit der ersten und an seinem anderen Ende mit der zweiten Schleife verbunden werden, so daß die Wagen über dieses Schienenstück von der einen in die andere Schleife verfahren werden können. Die Wagen durchlaufen dabei dieses Schienenstück immer in derselben Richtung, also gleichläufig. Ein gleichzeitiges, also zeitgleiches Verfahren von Wagen aus der ersten in die zweite und aus der zweiten in die ersten Schleife ist nicht möglich.

Ausgehend hiervon ist es Aufgabe der vorliegenden Erfindung, ein Verfahren und eine Werkzeugmaschine der eingangs genannten Art dahingehend weiterzubilden, daß die vorstehend erwähnten Nachteile vermieden werden. Insbesondere sollen die neue Werkzeugmaschine und das neue Verfahren einen schnellen Werkzeugwechsel ermöglichen, ohne daß konstruktiv aufwendige oder redundante Maßnahmen erforderlich sind.

Bei der eingangs erwähnten Werkzeugmaschine wird diese Aufgabe dadurch gelöst, daß durch die Magazinweichen das Maschinenmagazin und das Wechselmagazin so miteinander in Reihe schaltbar sind, daß ein gleichzeitiger Werkzeugwechsel aus dem Maschinenmagazin in das Wechselmagazin einerseits sowie aus dem Wechselmagazin in das Maschinenmagazin andererseits möglich wird, wobei die erste und die zweite Transportrichtung im Übergabebereich zueinander gegenläufig sind.

Bei diesen Maßnahmen ist von Vorteil, daß überhaupt keine weiteren Werkzeugwechsler erforderlich sind, so daß der konstruktive Aufwand gering gehalten werden kann. Durch die Magazinweichen sind die beiden Magazine jetzt so in Reihe geschaltet, daß bei dem gegenläufigen Verfahren der Werkzeuge in den beiden Magazinen die Schlange der Werkzeuge aus dem Maschinenmagazin in das Wechselmagazin hineinläuft und umgekehrt. Auf diese Weise wird das Wechselverfahren deutlich beschleunigt, denn nachdem die Magazinweichen geschaltet wurden, erfolgt der Werkzeugwechsel im normalen Transportrhythmus der beiden Magazine. Es fällt also die Zeit weg, die der oder die Werkzeugwechsler jeweils für den Werkzeugwechsel benötigen. Je nach Zahl der insgesamt in dem Maschinenmagazin aufgenommenen Werkzeuge führt dies also zu einer drastischen Reduzierung der Werkzeugwechselzeit.

Bei dem eingangs genannten Verfahren wird die der Erfindung zugrundeliegende Aufgabe dadurch gelöst, daß die Magazinweichen das Maschinenmagazin und das Wechselmagazin so miteinander in Reihe schalten, daß ein gleichzeitiger Werkzeugwechsel aus dem Maschinenmagazin in das Wechselmagazin einerseits sowie aus dem Wechselmagazin in das Maschinenmagazin andererseits möglich wird, wobei die Werkzeuge in dem Maschinenmagazin und dem Wechselmagazin gleichzeitig aber gegenläufig verfahren werden.

Der Vorteil dieser Maßnahme wurde bereits im Zusammenhang mit den für die neue Werkzeugmaschine vorgesehenen Magazinweichen diskutiert. Nachdem die beiden Magazine sozusagen "in Reihe geschaltet" wurden, können die Werkzeuge aus dem Maschinenmagazin in das Wechselmagazin und gleichzeitig die neuen Werkzeuge aus dem Wechselmagazin in das Maschinenmagazin verfahren werden. Auch hierzu ist es erforderlich, daß die Werkzeuge in den beiden Magazinen gegenläufig zueinander verfahren werden.

Insgesamt bieten die neue Werkzeugmaschine und das neue Verfahren zum Werkzeugwechsel zum einen den konstruktiven Vorteil, daß nur noch ein Wechselmagazin sowohl für das Ein- als auch für das Auswechseln erforderlich ist. Ferner ergibt sich ein Zeitvorteil bei der Rüstzeit der neuen Werkzeugmaschine von einem Satz an Werkzeugen auf einen anderen, weil sich durch die soeben beschriebenen Maßnahmen die Werkzeugwechselzeit dadurch reduziert, daß gleichzeitig Werkzeuge ein- und ausgewechselt werden können.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: in schematischer Darstellung eine Werkzeugmaschine mit zugeordnetem Wechselmagazin;
- Fig. 2: in schematischer Darstellung den zeitlichen Ablauf eines Werkzeugwechsels, der nicht Gegenstand der vorliegenden Erfindung ist, bei der Werkzeugmaschine aus Fig. 1, wobei ein Werkzeugwechsler vorgesehen ist;
- Fig. 3: in einer Darstellung wie Fig. 2 den zeitlichen Ablauf eines Werkzeugwechsels für zwei Werkzeugwechsler, der nicht Gegenstand der vorliegenden Erfindung ist; und
- Fig. 4: in schematischer Darstellung die Übergabevorrichtung bei der Werkzeugmaschine aus Fig. 1, wobei erfindungsgemäß Magazinweichen vorgesehen sind.

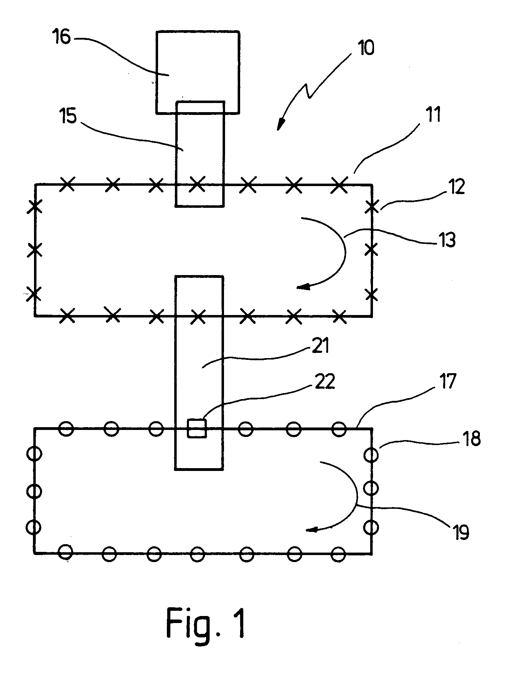

In Fig. 1 ist in schematischer Draufsicht eine Werkzeugmaschine 10 dargestellt, der ein Maschinenmagazin 11 zugeordnet ist. In dem Maschinenmagazin 11 sind Werkzeuge 12 gespeichert, die in einer bei 13 angedeuteten ersten Transportrichtung in dem Maschinenmagazin 11 verfahren werden.

Die Werkzeugmaschine 10 weist ferner eine Wechselvorrichtung 15 auf, mit welcher die Werkzeuge 12 aus dem Maschinenmagazin 11 in eine in Fig. 1 nicht dargestellte Arbeitsspindel eingewechselt werden, die lediglich in Form eines Spindelkopfes 16 in Fig. 1 angedeutet ist.

Die verschiedenen Werkzeuge 12 aus dem Maschinenmagazin 11 werden je nach Bedarf mittels der Wechselvorrichtung 15 in die Spindel eingewechselt. Der Speicherplatz des Maschinenmagazines 11 ist jedoch begrenzt, in dem gezeigten Ausführungsbeispiel kann das Maschinenmagazin 11 insgesamt zwanzig Werkzeuge 12 speichern. Soll die Werkzeugmaschine 10 auf einen neuen Bearbeitungsvorgang umgerüstet werden, oder sind die Werkzeuge 12 wegen ihres Langzeiteinsatzes verschlissen, so müssen die Werkzeuge 12 ausgewechselt werden.

Zu diesem Zweck ist der Werkzeugmaschine 10 ein Wechselmagazin 17 zugeordnet, in dem einzuwechselnde Werkzeuge 18 angeordnet sind. Die Werkzeuge 18 werden in dem Wechselmagazin 17 in einer bei 19 angedeuteten zweiten Transportrichtung verfahren.

Zwischen dem Maschinenmagazin 11 und dem Wechselmagazin 17 ist eine Übergabevorrichtung 21 vorgesehen, welche die Werkzeuge 12 aus dem Maschinenmagazin 11 in das Wechselmagazin 17 und gleichzeitig die Werkzeuge 18 aus dem Wechselmagazin 17 in das Maschinenmagazin 11 wechselt. In einem ersten Ausführungsbeispiel ist zu diesem Zweck in dem Wechselmagazin 17 ein Leerplatz 22 vorgesehen, so daß das Wechselmagazin 17 insgesamt einundzwanzig Speicherplätze aufweist.

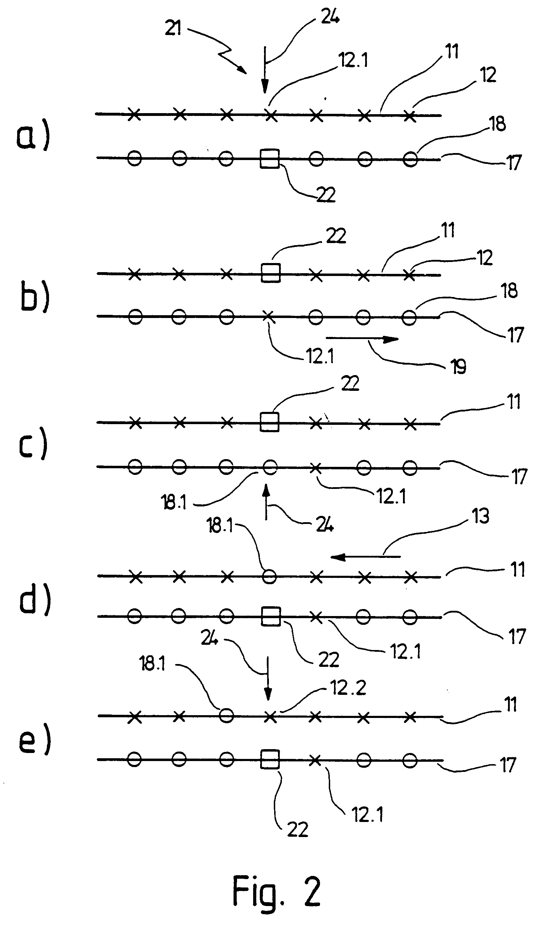

Das auf der Werkzeugmaschine 10 durchzuführende Verfahren zum Werkzeugwechsel wird nun anhand von Fig. 2 in einem ersten Ausführungsbeispiel, das nicht Gegenstand der Erfindung ist, beschrieben:

In Fig. 2 a) ist im Ausschnitt der Zustand der Werkzeugmaschine 10 gezeigt, wie er in Fig. 1 dargestellt ist. Die Übergabevorrichtung 21 umfaßt hier einen schematisch dargestellten Werkzeugwechsler 24, welcher durch einen Pfeil angedeutet ist.

In dem ersten Schritt a) schiebt der Werkzeugwechsler 24 das auszuwechselnde Werkzeug 12.1 aus dem Maschinenmagazin 11 in den in dem Wechselmagazin 17 vorgesehenen Leerplatz 22.

In dem nächsten Schritt b) wird das Wechselmagazin 17 in seiner Transportrichtung 19 um einen Schritt verfahren, so daß der nunmehr in dem Maschinenmagazin 11 vorhandene Leerplatz 22 gegenüber einem einzuwechselnden Werkzeug 18.1 zu liegen kommt. Der Werkzeugwechsler 24 schiebt nun in Schritt c) das einzuwechselnde Werkzeug 18.1 aus dem Wechselmagazin 17 in das Maschinenmagazin 11, so daß der Leerplatz 22 wieder in das Wechselmagazin 17 wandert. Dieser Zustand ist unter Schritt d) dargestellt.

Nunmehr wird das Maschinenmagazin 11 gegenläufig zu der Transportrichtung 19, nämlich in Richtung seiner Transportrichtung 13 verfahren, so daß das auszuwechselnde Werkzeug 12.2 gegenüber von dem nunmehr wieder im Wechselmagazin 17 vorhandenen Leerplatz 22 zu liegen kommt. Das Werkzeug 12.2 wird nunmehr in Schritt e) durch den Werkzeugwechsler 24 in das Wechselmagazin 17 geschoben, so daß die Schrittfolge zyklisch bei a) wieder beginnt.

Aus dem oben gesagten ergibt sich, daß durch das schrittweise und abwechselnde gegenläutige Verfahren der beiden Magazine 11 und 17 der Leerplatz 22 immer auf der Höhe des Werkzeugwechslers 24 bleibt, jedoch zwischen dem Maschinenmagazin 11 und dem Wechselmagazin 17 zyklisch wechselt. Durch das soeben beschriebene Verfahren wandern die Werkzeuge 12 aus dem Maschinenmagazin 11 heraus in das Wechselmagazin 17 hinein und bewegen sich dort in Richtung der zweiten Transportrichtung 19. Umgekehrt wandern die einzuwechselnden Werkzeuge 18 aus dem Wechselmagazin 17 in das Maschinenmagazin 11 hinein und werden dort in Richtung der Transportrichtung 13 verfahren.

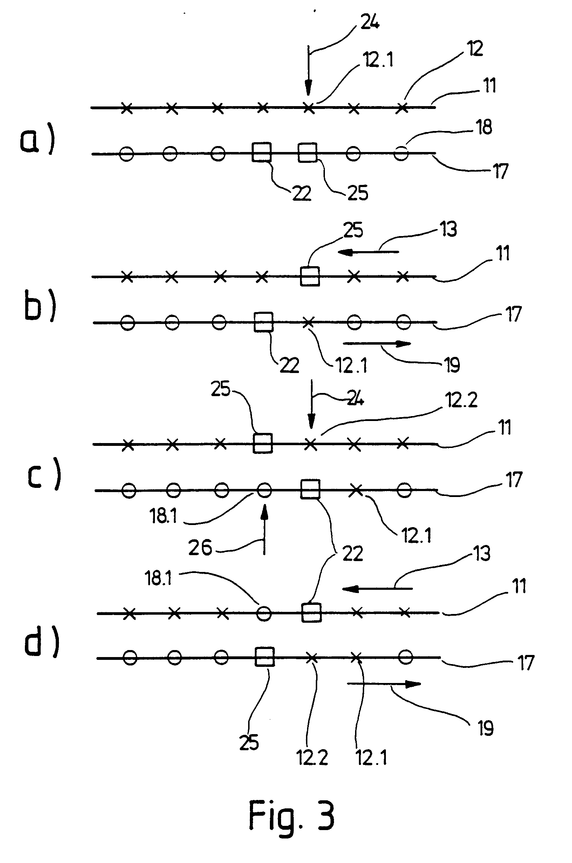

In Fig. 3 ist in einem zweiten Ausführungsbeispiel, das nicht Gegenstand der Erfindung ist, eine Durchführung des Verfahrens mit einem zweiten Leerplatz 25 und einem zweiten Werkzeugwechsler 26 beschrieben.

In Fig. 3 a) ist der Zustand beschrieben, in dem das Wechselmagazin 17 mit den beiden Leerplätzen 22 und 25 an das noch gefüllte Maschinenmagazin 11 herangefahren wurde. In einem ersten Schritt schiebt der Werkzeugwechsler 24 nun das Werkzeug 12.1 in den Leerplatz 25, so daß nun in jedem der beiden Magazine 11 und 12 je ein Leerplatz 22 und 25 vorhanden ist.

Im Schritt b) werden nun das Maschinenmagazin 11 in Transportrichtung 13 und gleichzeitig und gegensinnig das Wechselmagazin 17 in Transportrichtung 19 je um einen Schritt verfahren. Dies führt zu dem unter Schritt c) dargestellten Zustand, in dem der Leerplatz 22 gegenüber dem auszuwechselnden Werkzeug 12.2 und der Leerplatz 25 gegenüber dem einzuwechselnden Werkzeug 18.1 zu liegen kommt. Nunmehr werden die beiden Werkzeugwechsler 24 und 26 betätigt, welche die Werkzeuge 12.2 und 18.1 in das jeweils andere Magazin schieben.

Auf diese Weise gelangen der Leerplatz 22 in das Maschinenmagazin 11 und der Leerplatz 25 in das Wechselmagazin 17. Dieser Zustand ist in Schritt d) dargestellt. Jetzt werden das Maschinenmagazin 11 und das Wechselmagazin 17 wieder je um einen Schritt gegensinnig zueinander verfahren, so daß der Zustand aus dem Schritt c) wieder erreicht wird. Gegenüber dem anhand von Fig. 2 beschriebenen Verfahren führt dieses Verfahren gemäß Fig. 3 dazu, daß die für den gesamten Austausch sämtlicher Werkzeuge erforderliche Rüstzeit auf ca. ein Viertel abgesenkt werden kann. Zum einen werden nämlich jetzt jeweils zwei Werkzeuge zeitgleich aber gegenläufig ausgetauscht und zum anderen werden beide Magazine 11 und 17 zeitgleich und gegenläufig je um einen Schritt verfahren.

Hier sei noch bemerkt, daß die Werkzeugwechsler 24 und 26 gemäß Fig. 3 als einfache Schieber aufgebaut sein können, während der Werkzeugwechsler 24 aus Fig. 2 einen Werkzeugwechsel in beiden Richtungen bewerkstelligen kann. Somit ist auch der konstruktive Aufwand bei einer Werkzeugmaschine gemäß Fig. 3 noch einmal gegenüber einer Werkzeugmaschine gemäß Fig. 2 vereinfacht.

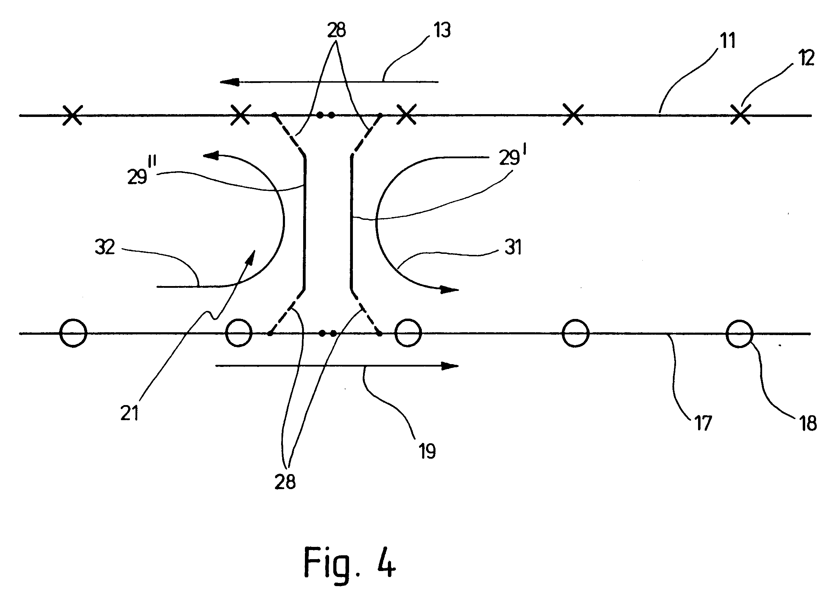

In Fig. 4 schließlich ist in einem erfindungsgemäßen Ausführungsbeispiel eine Übergabevorrichtung 21 gezeigt, welche insgesamt vier Magazinweichen 28 umfaßt. Die Magazinweichen 28 verbinden in der in Fig. 4 durchgezogenen Stellung die jeweilige linke und rechte Seite des Maschinenmagazines 11 bzw. des Wechselmagazines 17 miteinander. Werden die Magazinweichen 28 jedoch zum Werkzeugwechsel in die in Fig. 4 gezeigte gestrichelte Stellung geschwenkt, so verbinden sie über Magazinverbinder 29 das Maschinenmagazin 11 und das Wechselmagazin 17 derart miteinander, daß die beiden Magazine 11 und 17 sozusagen in Reihe geschaltet sind.

Die Werkzeuge 12 aus dem Maschinenmagazin 11 laufen jetzt über die Magazinverbindung 29' längs der Auswechselrichtung 31 in das Wechselmagazin 17 hinein, während gleichzeitig die einzuwechselnden Werkzeuge 18 über die Maschinenverbindung 29'' in das Maschinenmagazin 11 hineinlaufen, und dabei den durch einen Pfeil 32 angedeuteten Weg einschlagen. Dadurch, daß die Magazine 11 und 17 in Reihe geschaltet sind, und daß die Werkzeuge im Maschinenmagazin 11 gegenläufig zu den Werkzeugen im Wechselmagazin 17 verfahren werden, werden die Werkzeuge 12 und 18 im Takt des üblichen Verfahrens aus dem Maschinenmagazin 11 heraus bzw. in das Maschinenmagazin 11 hinein gefahren. Die Rüstzeit hängt jetzt abgesehen von den Schaltzeiten der Magazinweichen 28 lediglich von der Verfahrgeschwindigkeit der Werkzeuge 12 und 18 ab.

Es sei noch erwähnt, daß bei dem Ausführungsbeispiel nach Fig. 4 ein zusätzlicher Leerplatz nicht erforderlich ist, die Magazine 11 und 17 können sozusagen nahtlos aneinander gehängt werden. Dementsprechend ist auch kein Werkzeugwechsler erforderlich.

Ferner ist es möglich, mehrere Wechselmagazine 17 in Z-Richtung übereinander anzuordnen und höhenverfahrbar auszubilden, so daß das Maschinenmagazin 11 wahlweise aus einem Wechselmagazin beladen werden kann.

## Patentansprüche

1. Werkzeugmaschine, mit einem zugeordneten Maschinenmagazin (11) zur Aufnahme von mehreren, in einer ersten Transportrichtung (13) verfahrbaren Werkzeugen (12), einem Wechselmagazin (17) zur Aufnahme von mehreren, in einer zweiten Transportrichtung (19) verfahrbaren Werkzeugen (18), die in das Maschinenmagazin (11) ein- oder aus dem Maschinenmagazin (11) ausgewechselt werden sollen, sowie mit zumindest einer Übergabevorrichtung (21) für den Werkzeugwechsel zwischen dem Maschinenmagazin (11) und dem Wechselmagazin (17), wobei die Übergabevorrichtung (21) Magazinweichen (28) aufweist, über die das Maschinenmagazin (11) und das Wechselmagazin (17) für den Werkzeugwechsel in Reihe schaltbar sind, dadurch gekennzeichnet, daß durch die Magazinweichen (28) das Maschinenmagazin (11) und das Wechselmagazin (17) so miteinander in Reihe schaltbar sind, daß ein gleichzeitiger Werkzeugwechsel aus dem Maschinenmagazin (11) in das Wechselmagazin (17) einerseits sowie aus dem Wechselmagazin (17) in das Maschinenmagazin (11) andererseits möglich wird, wobei die erste und die zweite Transportrichtung (13, 19) im Übergabebereich zueinander gegenläufig sind.

2. Werkzeugmaschine nach Anspruch 1, dadurch gekennzeichnet, daß die Werkzeuge (12, 18) in dem Maschinenmagazin (11) und dem Wechselmagazin (17) gleichzeitig verfahren werden.

3. Verfahren zum Werkzeugwechsel zwischen einem einer Werkzeugmaschine (10) zugeordneten Maschinenmagazin (11) und einem Wechselmagazin (17), bei dem das Maschinenmagazin (11) mehrere, in einer ersten Transportrichtung (13) verfahrbare Werkzeuge (12) aufnimmt, das Wechselmagazin (17) mehrere, in einer zweiten Transportrichtung (19) verfahrbare Werkzeuge (18) aufnimmt, die in das Maschinenmagazin (11) ein- oder aus dem Maschinenmagazin (11) ausgewechselt werden sollen, und bei dem eine Übergabevorrichtung (21) die Werkzeuge (12, 18) zwischen dem Maschinenmagazin (11) und dem Wechselmagazin (17) wechselt, wobei die Übergabevorrichtung (21) für den Werkzeugwechsel das Maschinenmagazin (11) und das Wechselmagazin (17) vorübergehend durch Magazinweichen (28) in Reihe schaltet, dadurch gekennzeichnet, daß die Magazinweichen (28) das Maschinenmagazin (11) und das Wechselmagazin (17) so miteinander in Reihe schalten, daß ein gleichzeitiger Werkzeugwechsel aus dem Maschinenmagazin (11) in das Wechselmagazin (17) einerseits sowie aus dem Wechselmagazin (17) in das Maschinenmagazin (11) andererseits möglich wird, wobei die Werkzeuge (12, 18) in dem Maschinenmagazin (11) und dem Wechselmagazin (17) gleichzeitig aber gegenläufig verfahren werden.

## Claims

1. A machine tool comprising an associated machine magazine (11) for receiving a plurality of tools (12) that can be moved in a first transport direction (13), a changing magazine (17) for receiving a plurality of tools (18) that can be moved in a second transport direction (19) and are to be inserted into or removed from said machine magazine (11), as well as at least one transfer apparatus (21) for changing tools between the machine magazine (11) and the changing magazine (17), wherein the transfer apparatus (21) comprises magazine switches (28), by means of which the machine magazine (11) and the changing magazine (17) can be connected in series for the tool exchange, characterized in that the machine magazine (11) and the changing magazine (17) can be connected by means of the magazine switches (28) in series such that at the same time a tool exchange from the machine magazine (11) into said changing magazine (17) on the one hand as well as from the changing magazine (17) into the machine magazine (11) on the other hand is possible, wherein the first and second transport direction (13, 19) are opposite to each other in a transfer region.

2. A machine tool as in claim 1, characterized in that the tools (12, 18) are moved in the machine magazine (11) and the changing magazine (17) simultanously.

3. A method for changing tools between a machine magazine (11) associated with a machine tool (10) and a changing magazine (17), wherein the machine magazine (11) receives a plurality of tools (12) that can be moved in a first transport direction (13), the changing magazine (17) receives a plurality of tools (18) that can be moved in a second transport direction (19) and are to be inserted into or removed from the machine magazine (11), and wherein a transfer apparatus (21) changes the tools (12, 18) between the machine magazine (11) and the changing magazine (17), wherein the transfer apparatus (21) connects the machine magazine (11) and the changing magazine (17) by means of magazine switches in series temporarily, characterized in that the magazine switches (28) connect the machine magazine (11) and the changing magazine (17) in series such that at the same time a tool exchange from the machine magazine (11) into the changing magazine (17) on the one hand as well as from the changing magazine (17) into the machine magazine (11) on the other hand is possible, whereby the tools (12, 18) in the machine magazine (11) and the changing magazine (17) are moved simultaneously but in opposite direction.

## Revendications

1. Machine-outil comportant un magasin de machine (11) associé destiné à recevoir plusieurs outils (12) déplaçables dans un premier sens de transport (13), un magasin d'échange (17) destiné à recevoir plusieurs outils (18) déplaçables dans un deuxième sens de transport (19), qui doivent être échangés dans le magasin de machine (11) ou hors du magasin de machine (11), comportant aussi au moins un dispositif de transfert (21) pour le changement d'outil entre le magasin de machine (11) et le magasin d'échange (17), le dispositif de transfert (21) comportant des aiguillages de magasin (28), par lesquels le magasin de machine (11) et le magasin d'échange (17) peuvent être montés en série pour l'échange d'outils, caractérisée en ce que par les aiguillages de magasin (28), le magasin de machine (11) et le magasin d'échange (17) peuvent être montés en série entre eux, de manière qu'un échange d'outils simultané à partir du magasin de machine (11) dans le magasin d'échange (17) d'une part ainsi qu'à partir du magasin d'échange (17) dans le magasin de machine (11) d'autre part, soit possible, le premier et le deuxième sens de transport (13, 19) étant contraires l'un à l'autre dans la zone de transfert.

2. Machine-outil selon la revendication 1, caractérisée en ce que les outils (12, 18) sont déplacés simultanément dans le magasin de machine (11) et dans le magasin d'échange (17).

3. Procédé d'échange d'outils entre un magasin de machine (11), associé à la machine-outil (10) et un magasin d'échange (17), dans lequel le magasin de machine (11) reçoit plusieurs outils (12) déplaçables dans un premier sens de transport (13), le magasin d'échange (17) reçoit plusieurs outils (18) déplaçables dans un deuxième sens de transport (19), qui doivent être échangés dans le magasin de machine (11) ou hors du magasin de machine (11), et dans lequel un dispositif de transfert (21) échange les outils (12, 18) entre le magasin de machine (11) et le magasin d'échange (17), le dispositif de transfert (21) montant provisoirement en série, pour le changement d'outil, le magasin de machine (11) et le magasin d'échange (17), par des aiguillages de magasin (28), caractérisé en ce que les aiguillages de magasin (28) montent en série entre eux le magasin de machine (11) et le magasin d'échange (17) de manière que soit possible un échange d'outils simultané à partir du magasin de machine (11) dans le magasin d'échange (17) d'une part, ainsi qu'à partir du magasin d'échange (17) dans le magasin de machine (11) d'autre part, les outils (12, 18) dans le magasin de machine (11) et dans le magasin d'échange (17) étant toutefois déplacés simultanément en sens contraire.
